(19) **Europäisches Patentamt**
**European Patent Office**
**Office européen des brevets**

(11) **EP 4 486 616 B1**

(12) **EUROPÄISCHE PATENTSCHRIFT**

(45) Veröffentlichungstag und Bekanntmachung des Hinweises auf die Patenterteilung:
**12.11.2025 Patentblatt 2025/46**

(21) Anmeldenummer: **23707704.5**

(22) Anmeldetag: **24.02.2023**

(51) Internationale Patentklassifikation (IPC):
**B60W 60/00** (2020.01)  **B60W 50/02** (2012.01)
**B60W 50/029** (2012.01)  **B60W 50/00** (2006.01)

(52) Gemeinsame Patentklassifikation (CPC):
**B60W 60/00186; B60W 50/00; B60W 50/0205; B60W 50/029;** B60W 2050/0083; B60W 2050/0292; B60W 2540/18; B60W 2552/15; B60W 2552/40; B60W 2554/406; B60W 2554/802; B60W 2555/20; B60W 2556/45; B60W 2720/10

(86) Internationale Anmeldenummer:
**PCT/EP2023/054663**

(87) Internationale Veröffentlichungsnummer:
**WO 2023/161408 (31.08.2023 Gazette 2023/35)**

(54) **VERFAHREN, COMPUTERPROGRAMM, UND VORRICHTUNG ZUR ANPASSUNG VON BETRIEBSPARAMETERN EINES FORTBEWEGUNGSMITTELS, SOWIE FORTBEWEGUNGSMITTEL**

METHOD, COMPUTER PROGRAM, AND DEVICE FOR ADAPTING OPERATING PARAMETERS OF A MEANS OF LOCOMOTION, AND MEANS OF LOCOMOTION

PROCÉDÉ, PROGRAMME INFORMATIQUE ET DISPOSITIF D'ADAPTATION DE PARAMÈTRES DE FONCTIONNEMENT D'UN MOYEN DE LOCOMOTION, ET MOYEN DE LOCOMOTION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.02.2022 DE 102022202002**

(43) Veröffentlichungstag der Anmeldung:
**08.01.2025 Patentblatt 2025/02**

(73) Patentinhaber: **VOLKSWAGEN AKTIENGESELLSCHAFT**
**38440 Wolfsburg (DE)**

(72) Erfinder:
• **SCHLIMME, Hauke Christian**
**38100 Braunschweig (DE)**
• **JUST, Benjamin**
**39108 Magdeburg (DE)**

(56) Entgegenhaltungen:
DE-A1- 102019 115 330    DE-A1- 102019 125 817
US-A1- 2020 283 007    US-A1- 2021 171 025

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren, ein Computerprogramm mit Instruktionen und eine Vorrichtung zur Anpassung von Betriebsparametern eines Fortbewegungsmittels. Die Erfindung betrifft weiterhin ein Fortbewegungsmittel, in dem ein erfindungsgemäßes Verfahren oder eine erfindungsgemäße Vorrichtung eingesetzt wird.

Automatisiertes Fahren, auch als automatisches Fahren oder gesteuertes Fahren bezeichnet, ist die Bewegung von Fahrzeugen, mobilen Robotern und fahrerlosen Transportsystemen, die weitgehend autonom sind. Es gibt verschiedene Grade des automatisierten Fahrens. In Europa haben verschiedene Verkehrsministerien, z.B. in Deutschland die Bundesanstalt für Straßenwesen, die folgenden Automatisierungsstufen definiert:

- Level 0: "Nur Fahrer", der Fahrer fährt selbst, lenkt, beschleunigt, bremst usw.
- Level 1: Bestimmte Assistenzsysteme helfen bei der Fahrzeugbedienung, darunter ein Geschwindigkeitsregelungssystem wie ACC (Automatic Cruise Control).
- Level 2: Teilweise Automatisierung. Dabei werden automatisches Einparken, Spurführung, allgemeine Längsführung, Beschleunigung, Verzögerung usw. von den Assistenzsystemen übernommen, einschließlich der Kollisionsvermeidung.
- Level 3: Hohe Automatisierung. Der Fahrer muss das System nicht ständig überwachen. Das Fahrzeug führt selbständig Funktionen wie das Auslösen des Blinkers, den Spurwechsel und die Spurführung aus. Der Fahrer kann sich anderen Dingen zuwenden, muss aber auf Anforderung innerhalb einer Vorwarnzeit die Kontrolle übernehmen.
- Level 4: Vollständige Automatisierung. Die Führung des Fahrzeugs wird permanent vom System übernommen. Ist das System nicht mehr in der Lage, die Aufgaben zu bewältigen, kann der Fahrer aufgefordert werden, die Steuerung zu übernehmen.
- Level 5: Kein Fahrer erforderlich. Abgesehen vom Setzen des Ziels und Starten des Systems ist kein menschliches Eingreifen erforderlich.

Bei vollautomatisierten (Level 4) und autonomen Fahrzeugen (Level 5) wird der Fahrer von den Fahraufgaben entbunden und wird vom Fahrer zum Passagier. Im Falle eines kritischen Fehlers im primären Bremsregelsystem entfällt somit die menschliche Rückfallebene. Der Fahrer kann das Fahrzeug durch reine Fußkraft am Bremspedal nicht verzögern. Nach einem kritischen Fehler im primären Bremsregelsystem soll die Fahrt des vollautomatisierten oder autonomen Fahrzeugs nicht eingestellt werden, sondern fortgesetzt werden. Das Fahrzeug ermöglicht dazu mittels eines sekundären Bremsregelsystems eine sichere Weiterfahrt. Je länger diese Weiterfahrt andauert, desto höher ist allerdings die Wahrscheinlichkeit eines potentiellen Zweitfehlers. Fällt das sekundäre Bremsregelsystem ebenfalls aus, kann die Verzögerungsfähigkeit des Fahrzeugs mittels eines tertiären Bremssystems sichergestellt werden, um das Fahrzeug mindestens in den Stillstand zu verzögern. Die Bremsfunktionen des Fahrzeugs müssen somit mittels redundanter Systeme sichergestellt werden.

Somit müssen zur Gewährleistung der Betriebsbremsfunktion eines Level4/5-Fahrzeugs drei Bremsregelsysteme vorgehalten werden, welche in der Lage sind, unabhängig voneinander das Fahrzeug zu verzögern. Es ist nicht zu erwarten, dass ein sekundäres oder tertiäres Bremssystem ebenso leistungsfähig ist wie das primäre Bremssystem.

Eine ähnliche Problematik ist aufgrund der steigenden Anforderungen an moderne batterieelektrische Fahrzeuge zu erwarten. Dieser erfordern neben neuen Batterietechnologien auch neue Bremssysteme. In diesem Bereich werden in Zukunft vermehrt Brake-by-Wire-Systeme zum Einsatz kommen. Durch den Entfall der mechanischen Kopplung zwischen Bremspedal und Bremskraftverstärker existiert bei dieser Technologie jedoch keine Rückfallebene mehr, die im Falle eines Systemversagens die Verzögerung durch die reine Fußkraft des Fahrers am Pedal sicherstellt. Da eine Fahrt nach potentiellen Fehlern im Brake-by-Wire -System fortgesetzt werden soll, muss die Verzögerungsfähigkeit des Fahrzeugs sichergestellt sein. Eine Möglichkeit bietet hier die verbaute E-Maschine des Fahrzeugs im Generatorbetrieb. Da die Leistungsfähigkeit dieses Verzögerungssystems und dessen fahrdynamische Regelungen begrenzt sind, müssen die funktionalen Anforderungen an das Bremssystem in der Rückfallebene reduziert werden.

Eine Möglichkeit, den oben angeführten Leistungseinbußen entgegenzuwirken, stellt eine defensive Betriebsstrategie des Fahrzeugs während einer degradierten Weiterfahrt dar, in der einzelne Betriebsparameter adaptiert sind.

In diesem Zusammenhang beschreibt DE 10 2020 202 477 A1 ein Sicherheitssystem für einen elektrisch antreibbaren Kraftwagen, mit einer ersten Bremsanlage und mit einer zweiten Bremsanlage, die eine zum Antreiben des Kraftwagens ausgebildete elektrische Maschine umfasst, und mit einer dritten Bremsanlage, wobei das Sicherheitssystem aus einem Normalbetrieb, in welchem der Kraftwagen mittels der ersten Bremsanlage bremsbar ist, in einen Fehlerbetrieb, in welchem der Kraftwagen mittels der zweiten Bremsanlage bremsbar ist, umschaltbar ist. Ferner wird ein Verfahren zur Degradation des Antriebs entsprechend der aktuellen Leistungsfähigkeit der Bremsfunktion beschrieben, die maßgeblich durch den Fahrzeugzustand und die vorherrschenden Umgebungsbedingungen bestimmt wird.

Diese oben beschriebene Anpassung der Betriebsstrategie wird auf der Systemebene, der Bahnführungsebene und der Navigationsebene durchgeführt. Eine Reduzierung der funktionalen Anforderungen geht dabei einher mit einer Erhöhung der Sicherheit für Fahrzeuginsassen und andere Verkehrsteilnehmer. Eine Anpassung auf der Systemebene kann z.B. darin bestehen, dass die Batterie eines elektrisch betriebenen Fahrzeugs derart vorkonditioniert wird, dass hohe Ladezustände beim generatorischen Verzögern vermieden werden. Ein Beispiel für eine Anpassung auf der Bahnführungsebene stellt die Reduktion der Fahrgeschwindigkeit dar. Eine Anpassung auf der Navigationsebene kann z.B. darin bestehen, dass Streckenabschnitte mit Gefälle vermieden werden. Durch die Reduktion der Geschwindigkeit und die Anpassung weiterer Parameter entsteht ein Zielkonflikt zwischen der Minimierung des Gefährdungspotentials einerseits und der Maximierung des Komforts für die Insassen andererseits, z.B. aufgrund einer längeren Fahrtzeit durch die reduzierte Fahrgeschwindigkeit.

Vor diesem Hintergrund beschreibt WO 2017/220169 A1 ein dynamisch ausgelöstes, automatisiertes Kraftfahrzeugsystem, insbesondere ein auf Expertensystemen oder maschinellem Lernen basierendes Kraftfahrzeugsystem, das auf der Echtzeiterfassung von Fahrzeugdaten mittels verteilter Datenübertragungseinrichtungen auf autonom oder teilautonom fahrenden Kraftfahrzeugen beruht.

WO 2021/089567 A1 beschreibt ein System zum Steuern eines Fahrzeugs. Das System umfasst einen Cloud-Server, der eine dreidimensionale Simulation tatsächlicher Fahrbedingungen von Fahrzeugen in einem vorgegebenen Bereich auf Basis der in Echtzeit gesammelten Informationen eines gesteuerten Fahrzeugs und der Informationen umliegender Fahrzeuge durchführt. Zudem erzeugt der Cloud-Server Steuerinformationen für Entscheidungen bei der Fahrsimulation des gesteuerten Fahrzeugs entsprechend der dreidimensionalen Simulation der Fahrbedingungen von Fahrzeugen. Die Steuerinformationen werden an ein an Bord befindliches automatisches Fahrsystem des gesteuerten Fahrzeugs gesendet.

DE 10 2018 131 470 A1 beschreibt ein Fahrerassistenzsystem für ein Kraftfahrzeug. Das Fahrerassistenzsystem umfasst eine Umfeldsensorik, ein Steuergerät und ein Bewertungsmodul. Das Steuergerät ist eingerichtet, basierend auf von der Umfeldsensorik erfassten Umfelddaten ein Assistenzfunktionssteuersignal zu ermitteln, das in einem vorbestimmten Funktionszusammenhang mit wenigstens einem Assistenzsystemparameter und den erfassten Umfelddaten steht. Das Steuergerät ist zudem eingerichtet, das Fahrzeug zur Bereitstellung einer Assistenzfunktion mit dem Assistenzfunktionssteuersignal anzusteuern. Das Bewertungsmodul ist eingerichtet, einen Erfolgswert für das Assistenzfunktionssteuersignal anhand einer Referenzinformation zu ermitteln und, falls der Erfolgswert einen Erfolgsschwellwert unterschreitet, eine Optimierung des wenigstens einen Assistenzsystemparameters auszulösen.

DE 10 2019 208 735 B4 beschreibt ein Verfahren zum Betreiben eines Fahrassistenzsystems eines Fahrzeugs, bei dem aufeinanderfolgend Sensordaten von der Umgebung des Fahrzeugs aufgenommen und verifiziert werden. Die verifizierten Sensordaten werden mittels eines neuronalen Netzes analysiert. Auf Basis der analysierten Sensordaten werden Steuerdaten zum teilautomatisierten oder vollautomatisierten Steuern des Fahrzeugs erzeugt.

DE 10 2016 007 563 A1 beschreibt ein Verfahren zur Trajektorienplanung. Bei dem Verfahren befährt ein von einem Fahrzeugführer geführtes Fahrzeug eine tatsächliche Trajektorie. Mittels erfasster Sensordaten und eines aktuellen Fahrzustandes des Fahrzeugs wird eine Fahrtrajektorie des Fahrzeugs geplant, welche mit der tatsächlich gefahrenen Trajektorie verglichen wird. Das Vergleichsergebnis wird bewertet.

DE 10 2019 125 817 A1 beschreibt ein Verfahren zur Planung einer Trajektorie eines Fahrzeugs. Bei dem Verfahren werden Fahrzeugdaten und Umgebungsdaten empfangen. Abhängig von den Fahrzeugdaten und Umgebungsdaten werden Aufwandskartierungen erzeugt. Die Aufwandskartierungen werden zu einer kombinierten Aufwandskartierung kombiniert und es wird eine Trajektorie des Fahrzeugs ermittelt. Zum Nachfolgen der Trajektorie werden entsprechende Aktuatoren angesteuert.

DE 10 2019 115 330 A1 beschreibt eine Echtzeit-Sicherheitspfaderzeugung für ein hochautomatisiertes Fahrzeugrückfallmanöver. Um ein zumindest teilweise automatisiertes Fahrzeug in einen Zustand minimaler Gefahr zu bringen, wird eine Umgebung des Fahrzeugs mittels eines Sensorsystems während eines Normalbetriebsmodus überwacht. Mittels einer Steuereinheit wird eine Sicherheitstrajektorie während des Normalbetriebszustands abhängig von einem Ergebnis der Überwachung bestimmt. Ein Auslöseereignis wird detektiert und, in Reaktion auf das Auslöseereignis, wird das Fahrzeug von dem Normalbetriebszustand in einen Sicherheitsmodus geschaltet und das Fahrzeug derart gesteuert, dass es der Sicherheitstrajektorie automatisch folgt.

US 2021/0171025 A1 beschreibt ein Verfahren zur Vorhersage des Verhaltens eines sich bewegenden Körpers. Bei dem Verfahren werden ein erstes Verhalten des sich bewegenden Körpers auf der Basis von überwachtem Lernen und ein zweites Verhalten des sich bewegenden Körpers auf der Basis von Verstärkungslernen vorhergesagt.

US 2020/0283007 A1 beschreibt eine Fahrzeugsteuervorrichtung mit einer Kommunikationsvorrichtung zum Kommunizieren mit einem Fernsteuerungszentrum und mit einer Steuerung. Die Steuerung ist ausgestaltet, einen Zustand einer Vielzahl von Komponenten zu bestimmen, die beim autonomen Fahren genutzt werden. Die Steuerung ist zudem eingerichtet, ein Bestimmungsergebnis zu erzeugen und auszugeben. Auf Basis des Bestimmungsergebnisses wird ein Fahrmodus des Fahrzeugs bestimmt.

Es ist eine Aufgabe der Erfindung, verbesserte Lösungen zur Anpassung von Betriebsparametern eines Fortbewegungsmittels bereitzustellen.

Diese Aufgabe wird durch ein Verfahren mit den Merkmalen des Anspruchs 1, durch ein Computerprogramm mit Instruktionen gemäß Anspruch 10, durch eine Vorrichtung mit den Merkmalen des Anspruchs 11 sowie durch ein Fortbewegungsmittel gemäß Anspruch 12 gelöst. Bevorzugte Ausgestaltungen der Erfindung sind Gegenstand der abhängigen Ansprüche.

Gemäß einem ersten Aspekt der Erfindung umfasst ein Verfahren zur Anpassung von Betriebsparametern eines Fortbewegungsmittels im Ansprechen auf das Erfassen einer Fehlfunktion eines Systems des Fortbewegungsmittels die Schritte:

- Erfassen einer Fehlfunktion eines Systems des Fortbewegungsmittels;
- Erfassen von Umfelddaten bezüglich einer Fahrsituation des Fortbewegungsmittels;
- Erfassen von Zustandsdaten des Fortbewegungsmittels; und
- Bestimmen zu verwendender Betriebsparameter mittels eines Optimierungsalgorithmus auf Grundlage der Umfelddaten, der Zustandsdaten und initialer Betriebsparameter, wobei aus den Umfelddaten, den Zustandsdaten und den Betriebsparametern ein Gefährdungspotential bestimmt wird und aus einer Degradierung der Betriebsparameter ein Komfortpotential bestimmt wird, und wobei durch den Optimierungsalgorithmus eine Menge minimaler bzw. maximaler Parameterwerte zum Zeitpunkt einer anstehenden Aktion innerhalb eines aktuellen Szenarios identifiziert wird, die einen möglichst sicheren und komfortablen Ablauf der Aktion gewährleisten, aus der anschließend eine situationsgeeignete Parameterkombination gewählt wird.

Gemäß einem weiteren Aspekt der Erfindung umfasst ein Computerprogramm Instruktionen, die bei Ausführung durch einen Computer den Computer zur Ausführung der folgenden Schritte zur Anpassung von Betriebsparametern eines Fortbewegungsmittels im Ansprechen auf das Erfassen einer Fehlfunktion eines Systems des Fortbewegungsmittels veranlassen:

- Erfassen einer Fehlfunktion eines Systems des Fortbewegungsmittels;
- Erfassen von Umfelddaten bezüglich einer Fahrsituation des Fortbewegungsmittels;
- Erfassen von Zustandsdaten des Fortbewegungsmittels; und
- Bestimmen zu verwendender Betriebsparameter mittels eines Optimierungsalgorithmus auf Grundlage der Umfelddaten, der Zustandsdaten und initialer Betriebsparameter, wobei aus den Umfelddaten, den Zustandsdaten und den Betriebsparametern ein Gefährdungspotential bestimmt wird und aus einer Degradierung der Betriebsparameter ein Komfortpotential bestimmt wird, und wobei durch den Optimierungsalgorithmus eine Menge minimaler bzw. maximaler Parameterwerte zum Zeitpunkt einer anstehenden Aktion innerhalb eines aktuellen Szenarios identifiziert wird, die einen möglichst sicheren und komfortablen Ablauf der Aktion gewährleisten, aus der anschließend eine situationsgeeignete Parameterkombination gewählt wird.

Der Begriff Computer ist dabei breit zu verstehen. Insbesondere umfasst er auch Steuergeräte, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zur Anpassung von Betriebsparametern eines Fortbewegungsmittels im Ansprechen auf das Erfassen einer Fehlfunktion eines Systems des Fortbewegungsmittels auf:

- ein Überwachungsmodul zum Erfassen einer Fehlfunktion eines Systems des Fortbewegungsmittels;
- ein Datenerfassungsmodul zum Erfassen von Umfelddaten bezüglich einer Fahrsituation des Fortbewegungsmittels und zum Erfassen von Zustandsdaten des Fortbewegungsmittels; und
- ein Rechenmodul zum Bestimmen zu verwendender Betriebsparameter mittels eines Optimierungsalgorithmus auf Grundlage der Umfelddaten, der Zustandsdaten und initialer Betriebsparameter, wobei aus den Umfelddaten, den Zustandsdaten und den Betriebsparametern ein Gefährdungspotential bestimmt wird und aus einer Degradierung der Betriebsparameter ein Komfortpotential bestimmt wird, und wobei durch den Optimierungsalgorithmus eine Menge minimaler bzw. maximaler Parameterwerte zum Zeitpunkt einer anstehenden Aktion innerhalb eines aktuellen Szenarios identifiziert wird, die einen möglichst sicheren und komfortablen Ablauf der Aktion gewährleisten, aus der anschließend eine situationsgeeignete Parameterkombination gewählt wird.

Bei der erfindungsgemäßen Lösung wird das Finden geeigneter Werte der Betriebsparameter des Fortbewegungsmittels als mehrkriterielles Optimierungsproblem betrachtet. Mit Hilfe eines Optimierungsalgorithmus wird eine Menge minimaler bzw. maximaler Parameterwerte zum Zeitpunkt einer anstehenden Aktion innerhalb eines aktuellen Szenarios identifiziert, die einen möglichst sicheren und komfortablen Ablauf der Aktion gewährleisten. Dabei wird darauf geachtet, dass sich die Kritikalität des Szenarios nicht verschlimmert. Aus dieser Lösungsmenge wird anschließend eine situationsgeeignete Parameterkombination gewählt.

Erfindungsgemäß erfolgt die Anpassung der Betriebsparameter im Ansprechen auf ein Erfassen einer Fehlfunktion eines Systems des Fortbewegungsmittels. Da die Steuerungssysteme eines Fortbewegungsmittels auf einen regulären Betrieb der verbauten Systeme eingerichtet sind, ist die Nutzung der erfindungsgemäßen Lösung im regulären Betrieb oftmals nicht erforderlich. Besonders vorteilhaft ist sie hingegen, um in Fehlerfall möglichst geeignete Betriebsparameter zu bestimmen.

Erfindungsgemäß wird aus den Umfelddaten, den Zustandsdaten und den Betriebsparametern ein Gefährdungspotential bestimmt. Durch die Simulation der aktuellen Betriebssituation unter Berücksichtigung der aktuellen Verkehrslage und anderer Umweltdaten kann als erstes Kriterium ein Gefährdungspotential der aktuellen Auslegung der Betriebsparameter abgeleitet werden. Dieses Gefährdungspotential kann beispielsweise aus etablierten Sicherheitsmetriken wie FuSi (Funktionale Sicherheit) oder ASIL (Automotive Safety Integrity Level) abgeleistet werden.

Erfindungsgemäß wird aus einer Degradierung der Betriebsparameter ein Komfortpotential bestimmt. Der Komfort als zweites Kriterium kann direkt aus der Menge der aktuellen Betriebsparameter extrahiert werden. Dabei kann beispielsweise angenommen werden, dass die minimale Degradierung der Betriebsparameter zu optimalem Komfort führt.

Gemäß einem bevorzugten Aspekt der Erfindung ist das System mit einer Fehlfunktion ein Bremssystem oder ein Lenksystem. Fehler in diesen Systemen haben üblicherweise deutliche Auswirkungen auf die Betriebsstrategie, da lediglich eine degradierte Weiterfahrt möglich ist. In diesem Fall kann durch die erfindungsgemäße Lösung eine signifikante Steigerung des Komforts für die Insassen des Fortbewegungsmittels erzielt werden.

Gemäß einem bevorzugten Aspekt der Erfindung beschreiben die Umfelddaten eine Verkehrslage oder Umweltparameter. Die Verkehrslage hat einen erheblichen Einfluss auf die in einem gegebenen Szenario möglichen bzw. erforderlichen Aktionen. Auch Umweltparameter können relevant sein. Es ist daher sinnvoll, sie in die Bewertung der Zielkriterien einfließen zu lassen.

Gemäß einem bevorzugten Aspekt der Erfindung umfassen die Umweltparameter einen Reibwert, eine Umgebungstemperatur oder Informationen über eine Steigung oder ein Gefälle. Da diese Umweltparameter einen erheblichen Einfluss z.B. auf das Bremsverhalten haben, ist es vorteilhaft, wenn sie vom Optimierungsalgorithmus berücksichtigt werden.

Gemäß einem bevorzugten Aspekt der Erfindung umfassen die Zustandsdaten eine Geschwindigkeit Abstände, Lenkwinkel oder Reaktionszeitpunkte. Diese Zustandsdaten ermöglichen es beispielsweise, Betriebsparameter zu bestimmen, die geeignet sind, eine Kollision zu vermeiden oder zumindest eine Unfallschwere zu minimieren.

Gemäß einem bevorzugten Aspekt der Erfindung ist der Optimierungsalgorithmus ein evolutionärer Algorithmus. Evolutionäre Algorithmen basieren auf der Evolutionstheorie von Lebewesen.

Dabei werden einzelne Faktoren der natürlichen Evolution auf die Optimierung übertragen.

Evolutionäre Algorithmen basieren auf einem Wechselspiel zwischen der Modifikation und der Auswahl besserer Individuen und sind besonders gut für die Lösung komplexer Probleme geeignet. Selbstverständlich können aber auch andere Algorithmen zum Einsatz kommen.

Gemäß einem bevorzugten Aspekt der Erfindung wird das Verfahren in Echtzeit im Fortbewegungsmittel ausgeführt. Da eine steigende Rechenleistung insbesondere bei Level4/5-Fahrzeugen zu erwarten ist, kann ein erfindungsgemäßes Verfahren Online im Fahrzeug in Echtzeit durchgeführt werden. Auf diese Weise stehen die benötigten Betriebsparameter sehr schnell zur Verfügung.

Gemäß einem alternativen bevorzugten Aspekt der Erfindung wird der Optimierungsalgorithmus außerhalb des Fortbewegungsmittels ausgeführt. Die bestimmten zu verwendenden Betriebsparameter werden dann drahtlos an das Fortbewegungsmittel übermittelt. Insbesondere bei Level4/5-Fahrzeugen ist auch eine zunehmende Vernetzung zu erwarten. Daher besteht eine alternative Möglichkeit darin, die Auslegung der Betriebsparameter offline zu erlernen und die zu verwendenden Betriebsparameter über die eine Funkverbindung an das Fahrzeug zu übermitteln. Auf diese Weise kann die erfindungsgemäße Lösung auch für Fahrzeuge ohne ausreichende Rechenleistung implementiert werden.

Gemäß einem weiteren alternativen bevorzugten Aspekt der Erfindung werden im Ansprechen auf eine lokal im Fortbewegungsmittel erkannte Situation zu verwendende Betriebsparameter aus einer Datenbank außerhalb des Fortbewegungsmittels abgerufen. Eine weitere Möglichkeit der Implementierung der erfindungsgemäßen Lösung besteht darin, die aktuelle Situation zu erkennen, z.B. durch ein KI-gestütztes Tool, und auf vorhandene Datensätze zuzugreifen. Diese können beispielsweise in einem Backend eines Herstellers der Fortbewegungsmittels vorhanden sein.

Besonders vorteilhaft wird eine erfindungsgemäße Lösung in einem Fortbewegungsmittel eingesetzt. Bei dem Fortbewegungsmittel kann es sich beispielsweise um ein Kraftfahrzeug handeln, z.B. einen Personenkraftwagen oder ein Nutzfahrzeug. Die Nutzung der erfindungsgemäßen Lösung hat dabei den Vorteil, dass das Fortbewegungsmittel auch im Falle von Fehlern in Systemen des Fortbewegungsmittels zu einer degradierten Weiterfahrt in der Lage ist, bei der der Komfort für die Insassen maximiert ist.

Weitere Merkmale der vorliegenden Erfindung werden aus der nachfolgenden Beschreibung und den angehängten Ansprüchen in Verbindung mit den Figuren ersichtlich.

Fig. 1    zeigt schematisch ein Verfahren zur Anpassung von Betriebsparametern eines Fortbewegungsmittels;
Fig. 2    zeigt eine erste Ausführungsform einer Vorrichtung zur Anpassung von Betriebsparametern eines Fortbewegungsmittels;
Fig. 3    zeigt eine zweite Ausführungsform einer Vorrichtung zur Anpassung von Betriebsparametern eines Fortbewegungsmittels;
Fig. 4    stellt schematisch ein Fortbewegungsmittel dar, in dem eine erfindungsgemäße Lösung realisiert ist;
Fig. 5    zeigt schematisch ein Szenario, in dem eine erfindungsgemäße Lösung zur Anwendung kommen kann;
Fig. 6    zeigt schematisch einen Zyklus eines evolutionären Algorithmus;
Fig. 7    zeigt eine Startpopulation mit 80 Individuen;
Fig. 8    zeigt für die Individuen der Startpopulation bestimmte Kriterien;
Fig. 9    zeigt die für Individuen der 70. Generation bestimmten Kriterien; und
Fig. 10   zeigt schematisch ein weiteres Szenario, in dem eine erfindungsgemäße Lösung zur Anwendung kommen kann.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch modifiziert werden können, ohne den Schutzbereich der Erfindung zu verlassen, wie er in den angehängten Ansprüchen definiert ist.

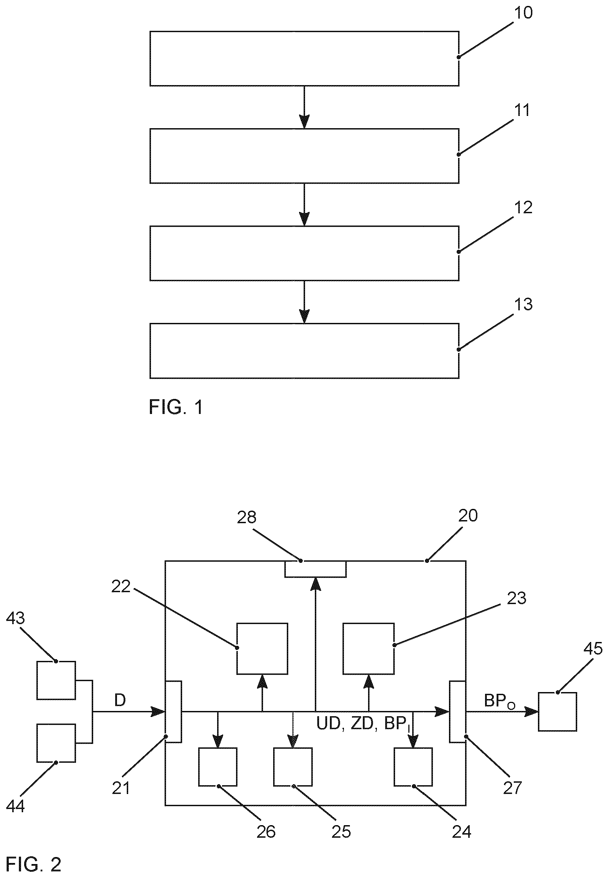

Fig. 1 zeigt schematisch ein Verfahren zur Anpassung von Betriebsparametern eines Fortbewegungsmittels. In einem ersten Schritt wird erfasst 10, dass eine Fehlfunktion eines Systems des Fortbewegungsmittels vorliegt, insbesondere eines Bremssystems oder eines Lenksystems. Zur Bestimmung der Betriebsparameter werden Umfelddaten bezüglich einer Fahrsituation des Fortbewegungsmittels erfasst 11. Die Umfelddaten können eine Verkehrslage oder Umweltparameter beschreiben, z.B. einen Reibwert, eine Umgebungstemperatur, eine Steigung oder ein Gefälle. Zudem werden Zustandsdaten des Fortbewegungsmittels erfasst 12. Die Zustandsdaten können beispielsweise eine Geschwindigkeit, Abstände, Lenkwinkel oder Reaktionszeitpunkte umfassen. Die zu verwendenden Betriebsparameter werden nun mittels eines Optimierungsalgorithmus auf Grundlage der Umfelddaten, der Zustandsdaten und initialer Betriebsparameter bestimmt 13. Dabei wird aus den Umfelddaten und den Zustandsdaten ein Gefährdungspotential bestimmt. Zudem wird aus einer Degradierung der Betriebsparameter ein Komfortpotential bestimmt. Durch den Optimierungsalgorithmus wird dann eine Menge minimaler bzw. maximaler Parameterwerte zum Zeitpunkt einer anstehenden Aktion innerhalb eines aktuellen Szenarios identifiziert, die einen möglichst sicheren und komfortablen Ablauf der Aktion gewährleisten, aus der anschließend eine situationsgeeignete Parameterkombination gewählt wird. Bei dem Optimierungsalgorithmus kann es sich beispielsweise um einen evolutionären Algorithmus handeln. In einer ersten Ausgestaltung wird das beschriebene Verfahren in Echtzeit im Fortbewegungsmittel ausgeführt. In einer zweiten Ausgestaltung wird der Optimierungsalgorithmus außerhalb des Fortbewegungsmittels ausgeführt. Die bestimmten 13 zu verwendenden Betriebsparameter werden dann drahtlos an das Fortbewegungsmittel übermittelt. In einer dritten Ausgestaltung werden im Ansprechen auf eine lokal im Fortbewegungsmittel erkannte Situation die zu verwendenden Betriebsparameter aus einer Datenbank außerhalb des Fortbewegungsmittels abgerufen.

Fig. 2 zeigt eine vereinfachte schematische Darstellung einer ersten Ausführungsform einer Vorrichtung 20 zur Anpassung von Betriebsparametern eines Fortbewegungsmittels. Die Vorrichtung 20 hat einen Eingang 21, über den Daten D von Sensoren 43, 44 des Fortbewegungsmittels empfangen werden können. Ein Überwachungsmodul 22 ist eingerichtet, das Vorliegen einer Fehlfunktion eines Systems des Fortbewegungsmittels zu erfassen, insbesondere eines Bremssystems oder eines Lenksystems. Ein Datenerfassungsmodul 23 ist eingerichtet, in den empfangenen Daten D enthaltene Umfelddaten UD bezüglich einer Fahrsituation des Fortbewegungsmittels und Zustandsdaten ZD des Fortbewegungsmittels zu erfassen. Die Umfelddaten UD können eine Verkehrslage oder Umweltparameter beschreiben, z.B. einen Reibwert, eine Umgebungstemperatur, eine Steigung oder ein Gefälle. Die Zustandsdaten ZD können beispielsweise eine Geschwindigkeit, Abstände, Lenkwinkel oder Reaktionszeitpunkte umfassen. Ein Rechenmodul 24 ist eingerichtet, zu verwendende Betriebsparameter $BP_O$ mittels eines Optimierungsalgorithmus auf Grundlage der Umfelddaten UD, der Zustandsdaten ZD und initialer Betriebsparameter $BP_I$ zu bestimmen. Dabei wird aus den Umfelddaten UD, den Zustandsdaten ZD und den Betriebsparametern $BP_I$ ein Gefährdungspotential bestimmt. Zudem wird aus einer Degradierung der Betriebsparameter $BP_I$ ein Komfortpotential bestimmt. Das Rechenmodul 24 ist dabei eingerichtet, mittels des Optimierungsalgorithmus eine Menge minimaler bzw. maximaler Parameterwerte zum Zeitpunkt einer anstehenden Aktion innerhalb eines aktuellen Szenarios zu identifizieren, die einen möglichst sicheren und komfortablen Ablauf der Aktion gewährleisten, aus der das Rechenmodul 24 anschließend eine situationsgeeignete Parameterkombination wählt. Bei dem Optimierungsalgorithmus kann es sich beispielsweise um einen evolutionären Algorithmus handeln. Die so bestimmten zu verwendenden Betriebsparameter $BP_O$ können über einen Ausgang 27 der Vorrichtung 20 an ein Steuerungssystem 45 des Fortbewegungsmittels ausgegeben werden. Selbstverständlich kann die Vorrichtung 20 auch Bestandteil eines solchen Steuerungssystems 45 sein. In einer ersten Ausgestaltung führt die Vorrichtung 20 die beschriebenen Verfahrensschritte in Echtzeit im Fortbewegungsmittel aus. In einer zweiten Ausgestaltung wird der Optimierungsalgorithmus außerhalb des Fortbewegungsmittels ausgeführt. Die bestimmten zu verwendenden Betriebsparameter $BP_O$ werden dann drahtlos an das Fortbewegungsmittel übermittelt. In einer dritten Ausgestaltung werden im Ansprechen auf eine lokal im Fortbewegungsmittel erkannte Situation die zu verwendenden Betriebsparameter $BP_O$ aus einer Datenbank außerhalb des Fortbewegungsmittels abgerufen.

Das Überwachungsmodul 22, das Datenerfassungsmodul 23 und das Rechenmodul 24 können von einem Kontrollmodul 25 gesteuert werden. Über eine Benutzerschnittstelle 28 können gegebenenfalls Einstellungen des Überwachungsmoduls 22, des Datenerfassungsmoduls 23, des Rechenmoduls 24 oder des Kontrollmoduls 25 geändert werden. Die in der Vorrichtung 20 anfallenden Daten können bei Bedarf in einem Speicher 26 abgelegt werden, beispielsweise für eine spätere Auswertung oder für eine Nutzung durch die Komponenten der Vorrichtung 20. Das Überwachungsmodul 22, das Datenerfassungsmodul 23, das Rechenmodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

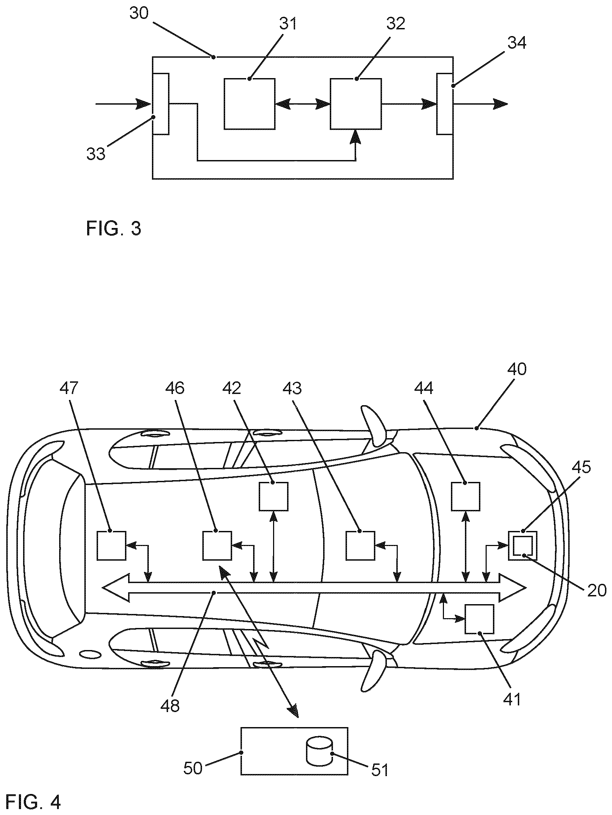

Fig. 3 zeigt eine vereinfachte schematische Darstellung einer zweiten Ausführungsform einer Vorrichtung zur Anpassung von Betriebsparametern eines Fortbewegungsmittels. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Umfelddaten und Zustandsdaten. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Nachfolgend soll eine bevorzugte Ausführungsform einer erfindungsgemäßen Lösung anhand von Fig. 4 bis Fig. 10 an einem konkreten Anwendungsbeispiel beschrieben werden.

Fig. 4 stellt schematisch ein Fortbewegungsmittel 40 dar, in dem eine erfindungsgemäße Lösung realisiert ist. Bei dem Fortbewegungsmittel 40 handelt es sich in diesem Beispiel um ein Kraftfahrzeug. Das Kraftfahrzeug weist ein Bremssystem 41, ein Lenksystem 42 sowie ein Steuerungssystem 45 auf. Eine Umgebungssensorik 43 ist eingerichtet, Umfelddaten bezüglich einer Fahrsituation des Kraftfahrzeugs bereitzustellen. Die Umgebungssensorik 43 kann z.B. Kameras, Radarsensoren, Lidarsensoren, Ultraschallsensoren oder Klimasensoren umfassen. Eine Zustandssensorik 44 ist eingerichtet, Zustandsdaten des Kraftfahrzeugs bereitzustellen. Das Steuerungssystem 45 weist eine erfindungsgemäße Vorrichtung 20 zur Anpassung von Betriebsparametern auf, die alternativ auch als eigenständige Komponente ausgestaltet oder in eine andere Komponente des Kraftfahrzeugs integriert sein kann. Die Vorrichtung 20 greift für die Anpassung der Betriebsparameter auf Daten der Umgebungssensorik 43 und der Zustandssensorik 44 zu. Mittels einer Datenübertragungseinheit 46 können Verbindungen zu einem Backend 50 aufgebaut werden, z.B. zum Austausch von Daten oder zum Empfangen von Betriebsparametern, die in einer Datenbank 51 des Backends 50 abgelegt sind. Zur Speicherung von Daten ist ein Speicher 47 vorhanden. Der Datenaustausch zwischen den verschiedenen Komponenten des Kraftfahrzeugs erfolgt über ein Netzwerk 48.

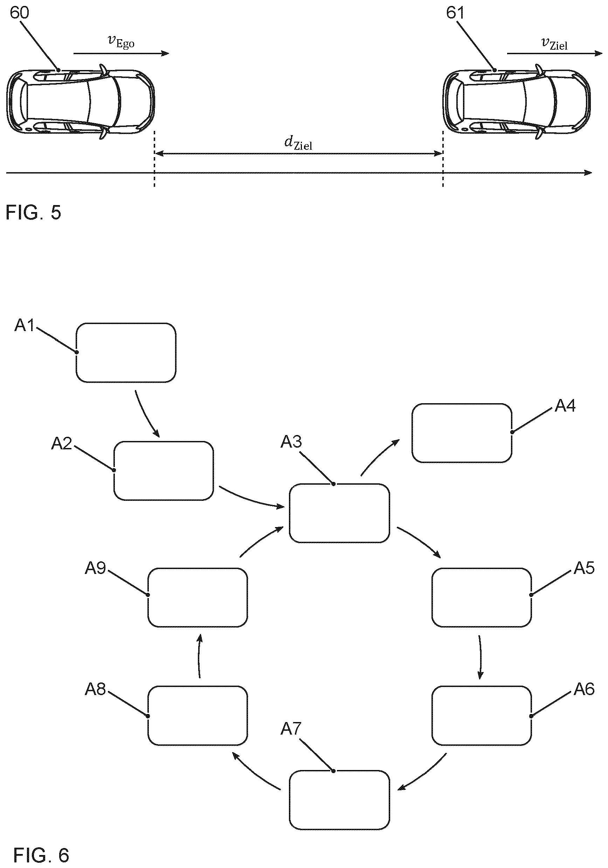

Fig. 5 zeigt schematisch ein Szenario, in dem eine erfindungsgemäße Lösung zur Anwendung kommen kann. Das betrachtete Ego-Fahrzeug 60 nähert sich einem Ziel-Fahrzeug 61. Das Zielfahrzeug verzögert in den Stillstand, d.h. es findet eine Vollverzögerung statt. Ausgangspunkt ist die Situation, dass sowohl das primäre als auch das sekundäre Bremsregelsystem des Ego-Fahrzeugs 60 eine Fehlfunktion aufweist. Die Fahrzeugverzögerung muss daher mit einem weiteren redundantem System sichergestellt werden, d.h. einem tertiären Bremssystem. Dabei kann es sich beispielsweise um eine Kombination aus E-Maschine und Parkbremse handeln. Es muss nun sichergestellt werden, dass funktionale Anforderungen an das tertiäre Bremssystem reduziert werden. Dies wird erreicht durch eine defensive Betriebsstrategie. Die dazu erforderliche Anpassung der Betriebsstrategie wird auf der Systemebene, der Bahnführungsebene und der Navigationsebene durchgeführt. Auf der Systemebene kann z.B. die Performance der E-Maschine verbessert werden. Auf der Navigationsebene kann die Route mit den geringsten und vom tertiären Bremssystem leistbaren Anforderungen gewählt werden. Auf der Bahnführungsebene kann eine Adaption von Betriebsparametern erfolgen, z.B. bezüglich Geschwindigkeit, Lenkwinkel, etc.

Jedem Szenario können Parameter zugeordnet werden. Dies sind zum einen Umgebungsparameter, wie z.B. Reibwert, Temperatur, Steigung, Gefälle, etc. Diese legen fest, ob sich das Szenario innerhalb der vorgesehenen operativen Einsatzbereiche (engl. Operational Design Domain; ODD) befindet. Zum anderen handelt es sich um eigene Fahrzeugparameter, wie z.B. Geschwindigkeit, Abstände, Lenkwinkel oder Reaktionszeitpunkte, etc. Diese sind relevant in Bezug auf die fahrdynamischen Aufgaben (engl. Dynamic Driving Tasks; DDT). Relevante Parameter im dargestellten Szenario sind die Geschwindigkeit des Ziel-Fahrzeugs 61 bzw. der Verzögerungsverlauf, die Ego-Geschwindigkeit sowie der initiale Abstand zum Ziel-Fahrzeug 61.

Ziel ist es nun, für das gegebene Szenario die Grenzwerte der Betriebsparameter zu identifizieren, welche das Ego-Fahrzeug 60 zum Zeitpunkt einer Bremsung besitzen muss, um in diesem Fall einerseits eine Kollision zu meiden bzw. eine Unfallschwere zu minimieren und andererseits ein sogenanntes Durchreichen zu vermeiden, d.h. ein Einfädeln anderer Fahrzeige in den Bereich zwischen dem Ego-Fahrzeug 60 und dem Ziel-Fahrzeug 61. Aus dem zweiten Kriterium ergibt sich, dass Abstand und Relativgeschwindigkeit gering sein sollten.

Fig. 6 zeigt schematisch einen Zyklus eines evolutionären Algorithmus, wie er in K. Weicker: "Evolutionäre Algorithmen", Springer Vieweg, beschrieben ist. Evolutionäre Algorithmen basieren auf der Evolutionstheorie von Lebewesen. Dabei werden einzelne Faktoren der natürlichen Evolution auf die Optimierung übertragen. Evolutionäre Algorithmen basieren auf einem Wechselspiel zwischen der Modifikation und der Auswahl besserer Individuen. Der Zyklus beginnt mit einer Initialisierung A1 der Population, gefolgt von einer Bewertung A2. Falls eine Überprüfung A3 ergibt, dass ein Abbruchkriterium erreicht wurde, erfolgt eine Ausgabe A4 der Population. Andernfalls erfolgt eine Paarungsselektion A5 gefolgt von einer Rekombination A6, bei der neue Lösungsvektoren aus alten Lösungsvektoren gebildet werden. In einer nachfolgenden Mutation A7 werden diese neuen Lösungsvektoren verändert. Die veränderten Lösungsvektoren werden einer Bewertung A8 und einer Umweltselektion A9 unterzogen, bevor wiederum das Erreichen des Abbruchkriteriums überprüft wird A3.

Die unterschiedliche Darstellung von Lösungskandidaten für jedes beliebige Optimierungsproblem führt zur Abgrenzung des Suchraums $\Omega$. Dieser beschreibt den Phänotyp. Der Genotyp $\mathcal{G}$ hingegen stellt den Lösungskandidaten in einem Individuum dar. Dabei ist die Bewertungsfunktion (7) auf dem Phänotyp definiert. Die Operatoren Rekombination (3) und Mutation (2) auf dem Genotyp. Eine Dekodierungsfunktion

$$dec: \mathcal{G} \to \Omega \qquad\qquad (1)$$

ermöglicht die Bewertung des im Genotyp vorliegendem Individuum, durch die Abbildung in den Suchraum.

Ein Individuum wird definiert als Tupel (A. G, A. S, A. F). Dieses besteht aus dem Genotyp $A. G \in \mathcal{G}$, optionalen Zusatzinformationen $A. S \in \mathcal{Z}$ und dem Gütewert $A. F = f(dec(A. G)) \in \mathbb{R}$. Weiterhin sind der Mutationsoperator definiert als Abbildung

$$Mut\xi: \mathcal{G} \times \mathcal{Z} \to \mathcal{G} \times \mathcal{Z} \qquad\qquad (2)$$

und der Rekombinationsoperator analog mit $r \geq 2$ Eltern und $s \geq 1$ Kindern ebenfalls als Abbildung

$$Rek^{\xi}: (\mathcal{G} \times \mathcal{Z})^r \to (\mathcal{G} \times \mathcal{Z})^s. \qquad\qquad (3)$$

Dabei stellt $\xi \in \Xi$ einen Zustand des Zufallsgenerators dar. $\Xi$ ist die Menge der möglichen Zustände.

Bei der Rekombination werden im Sinne eines evolutionären Algorithmus einzelne Bestandteile des Genotyps der Eltern-Individuen kombinatorisch verknüpft und anschließend auf die Kind-Individuen übertragen. Es werden Varianten bestehender Lösungskandidaten erzeugt. Für das Einhalten von Randbedingungen können speziell entworfene Mutations- und Rekombinationsoperatoren genutzt werden, welche eine Generierung ungültiger Individuen verhindern.

Der Selektionsoperator erhält als Eingabe eine Population und wählt aus r Individuen s Individuen aus. Der Selektionsoperator ist auf eine Indexselektion zurückzuführen, da lediglich Individuen ausgewählt und keine neuen erzeugt werden. Der Selektionsoperator ist auf einer Population $P = \langle A(1), ..., A(r) \rangle$ definiert als Abbildung

$$Sel^{\xi}: (\mathcal{G} \times \mathcal{Z} \times \mathbb{R})^r \to (\mathcal{G} \times \mathcal{Z} \times \mathbb{R})^s$$
$$\langle A^{(i)} \rangle_{1 \leq i \leq r} \mapsto \langle A^{(IS^{\xi}(c_1,...,c_r)_k)} \rangle_{1 \leq k \leq s} \text{ mit } A^{(i)} = (a_i, b_i, c_i). \qquad (4)$$

Die Indexselektion ist definiert durch:

$$IS^{\xi}: \mathbb{R}^r \to \{1, \dots, r\}^s. \qquad (5)$$

Ein evolutionärer Grundalgorithmus ist in Algorithmus 1 dargestellt.

## Algorithmus 1

**1**   **Input:** $(\Omega, F, \succ)$

**2**   $t \leftarrow 0$

**3**   $Pop(t) \leftarrow$ Initialisiere Anfangspopulation mit $\mu$ Individuen

**4**   **foreach** $x$ **in** $Pop(t)$: Bewertung nach Zielfunktion $F$

**5**   **while(!Terminierungsbedingung)**

**6**   **do**

**7**       Wähle Individuen aus $Pop(t)$, um Nachkommen zu erzeugen

**8**       $Pop'(t) \leftarrow$ Erzeuge $\lambda$ Nachkommen

**9**       **foreach** $x$ **in** $Pop'(t)$: Mutiere Individuum

**10**      **foreach** $x$ **in** $Pop'(t)$: Bewertung nach Zielfunktion $F$

**11**      $Pop''(t) \leftarrow Pop(t) \circ Pop'(t)$

**12**      $Pop(t+1) \leftarrow$ Wähle $\mu$ Individuen entsprechend ihrer Fitness aus $Pop''(t)$

**13**      $t \leftarrow t + 1$

**14**  **od**

**15**  **Output:** $Pop(t)$

Die Bestimmung der Betriebsparameter kann als Optimierungsproblem $(\Omega, F, \succ)$ betrachtet werden, mit der der Vergleichsrelation $\succ \in \{<, >\}$, mit dem Suchraum $\Omega \in \mathbb{R}^n$ und

$$\Omega = \left\{ \begin{pmatrix} x_1 \\ \dots \\ x_n \end{pmatrix} : c_{1,\text{Min}} \le x_1 \le c_{1,\text{Max}} \wedge \dots \wedge c_{n,\text{Min}} \le x_n \le c_{n,\text{Max}} \right\}. \qquad (6)$$

Der Lösungskandidat $x \in \Omega$ enthält relevante Betriebsparameter des Fahrzeugs. Die in (6) als Nebenbedingung formulierte Eingrenzung der Betriebsparameter führt zu einer Abgrenzung des Suchraums. Dabei muss es nicht notwendigerweise für jede Entscheidungsvariable $x_i$ eines Lösungskandidaten $x \in \Omega$ eine Einschränkung geben. Zudem können die Einschränkungen nicht nur unter und obere Grenzen sein. Es kann sich z.B. auch um die Forderung nach Ganzzahligkeit etc. handeln.

Die Bewertungsfunktion $F: \mathbb{R}^n \to \mathbb{R}^k$ ist für $x \in \Omega$ definiert durch:

$$F(x) = \begin{pmatrix} \text{Kriterium}_1 \\ \dots \\ \text{Kriterium}_k \end{pmatrix}. \qquad (7)$$

Für das in Fig. 5 dargestellte betrachtete Szenario können als Zielkriterien die Kollisionsgeschwindigkeit $v_{\text{Kollision}}$, die Relativgeschwindigkeit $v_{\text{Ziel}} - v_{\text{Ego}}$ und der Abstand $d_{\text{Ziel}}$ zwischen dem Ego-Fahrzeug und dem Ziel-Fahrzeug betrachtet werden. Die Kollisionsgeschwindigkeit soll minimiert werden, da sie einen Einfluss auf die Unfallschwere hat. Diese kann z.B. unter Verwendung bekannter Ansätze durch eine Simulation bestimmt werden. Ein geringer Abstand soll insbesondere verhindern, dass ein weiteres Fahrzeug vor dem Ego-Fahrzeug einschert, z.B. nach einem Überholvorgang.

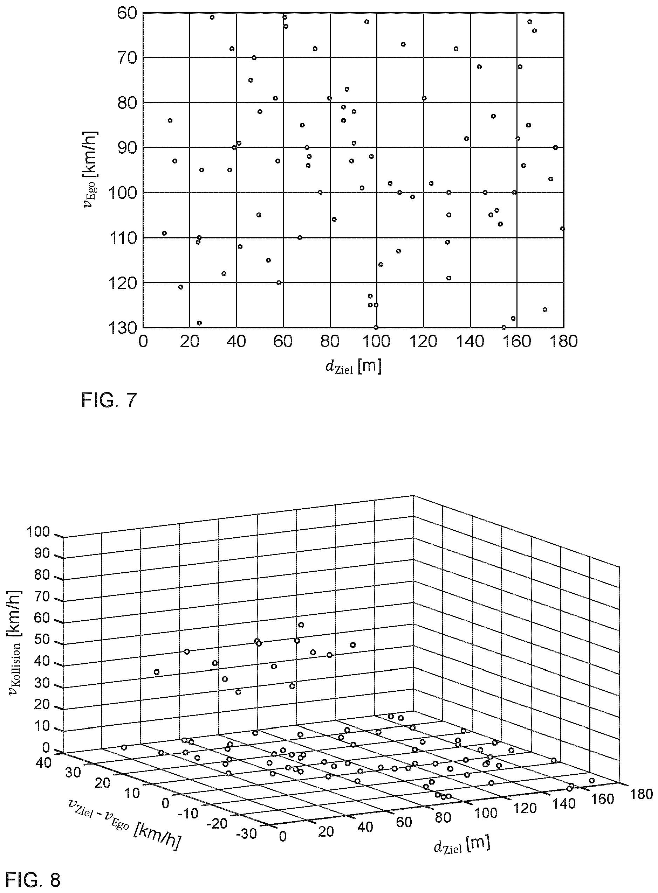

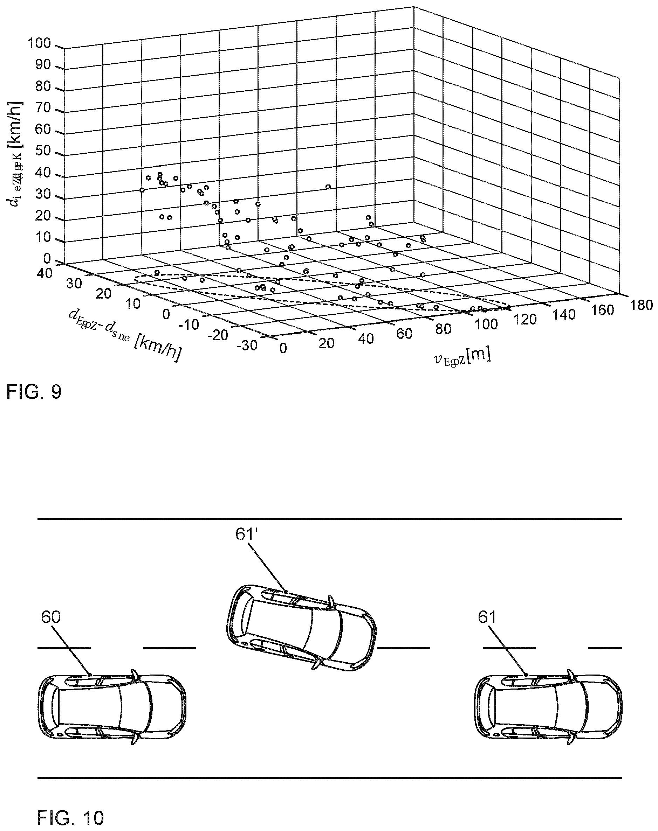

Fig. 7 zeigt eine beispielhafte Startpopulation mit 80 Individuen. Die Individuen sind zufällig gleichverteilt über den Suchraum $\Omega$. Fig. 8 zeigt die für die Individuen der Startpopulation bestimmten Kriterien der Bewertungsfunktion $F(x)$. Die Individuen werden mittels der Bewertungsfunktion (7) im Lösungsraum abgebildet. Fig. 9 zeigt die für Individuen der 70. Generation bestimmten Kriterien der Bewertungsfunktion $F(x)$. Der gestrichelt hervorgehobene Bereich markiert diejenigen Mitglieder der pareto-optimalen Menge, die eine Kollision vermeiden. Der implementierte evolutionäre Algorithmus resultiert, unter dem betrachtetem Szenario, in einer breiten Verteilung der Individuen entlang der Pareto-Front. Dies bietet dem Entscheidungsträger eine große Auswahl möglicher Lösungen. Es können somit optimale Betriebsparameterkombination gewählt werden, um eine Kollision zu verhindern. Die oberhalb des hervorgehobenen Bereichs liegenden Mitglieder sind interessant, um auf eine mögliche Schwere einer Kollision zu schließen, wenn eine Kollision nicht mehr zu vermeiden ist. Darauf aufbauend können Gegenmaßnahmen eingeleitet werden, wie z.B. das Straffen der Gurte.

Die Pareto-Front kann ebenfalls für weitere Anwendungsfälle genutzt werden. Fig. 10 zeigt schematisch ein weiteres Szenario, in dem eine erfindungsgemäße Lösung zur Anwendung kommen kann. Es handelt sich bei diesem Szenario um das Einscheren eines Ziel-Fahrzeugs 61' vor dem Ego-Fahrzeug 60. Basierend auf der erfindungsgemäßen Lösung kann ein Verzögerungszeitpunkt entschieden werden, wenn das Ziel-Fahrzeug 61' vor dem Ego-Fahrzeug 60 einschert. Auch in diesem Fall soll, sobald das Ziel-Fahrzeug 61' vollverzögerungsrelevant ist, eine Kollision vermieden werden. Ein weiterer Anwendungsfall sind Ausweichmanöver, für die der Lenkwinkel, die Geschwindigkeit und der Ausweichzeitpunkt bestimmt werden können.

**Bezugszeichenliste**

| | |
|---|---|
| 10 | Erfassen einer Fehlfunktion |
| 11 | Erfassen von Umfelddaten bezüglich einer Fahrsituation |
| 12 | Erfassen von Zustandsdaten des Fortbewegungsmittels |
| 13 | Bestimmen von Betriebsparametern mittels eines Optimierungsalgorithmus |
| 20 | Vorrichtung |
| 21 | Eingang |
| 22 | Überwachungsmodul |
| 23 | Datenerfassungsmodul |
| 24 | Rechenmodul |
| 25 | Kontrollmodul |
| 26 | Speicher |
| 27 | Ausgang |
| 28 | Benutzerschnittstelle |
| 30 | Vorrichtung |
| 31 | Speicher |
| 32 | Prozessor |
| 33 | Eingang |
| 34 | Ausgang |
| 40 | Fortbewegungsmittel |
| 41 | Bremssystem |
| 42 | Lenksystem |
| 43 | Umgebungssensorik |
| 44 | Zustandssensorik |
| 45 | Steuerungssystem |
| 46 | Datenübertragungseinheit |
| 47 | Speicher |
| 49 | Netzwerk |
| 50 | Backend |
| 51 | Datenbank |
| 60 | Ego-Fahrzeug |
| 61, 61' | Ziel-Fahrzeug |
| $BP_I$ | Initiale Betriebsparameter |
| $BP_O$ | Zu verwendende Betriebsparameter |
| D | Daten |
| UD | Umfelddaten |

| ZD | Zustandsdaten |
|----|---------------|
| A1 | Initialisierung |
| A2 | Bewertung |
| A3 | Überprüfung |
| A4 | Ausgabe |
| A5 | Paarungsselektion |
| A6 | Rekombination |
| A7 | Mutation |
| A8 | Bewertung |
| A9 | Umweltselektion |

**Patentansprüche**

1. Verfahren zur Anpassung von Betriebsparametern eines Fortbewegungsmittels (40) im Ansprechen auf das Erfassen (10) einer Fehlfunktion eines Systems (41, 42) des Fortbewegungsmittels (40), mit den Schritten:

   - Erfassen (10) einer Fehlfunktion eines Systems (41, 42) des Fortbewegungsmittels (40);
   - Erfassen (11) von Umfelddaten (UD) bezüglich einer Fahrsituation des Fortbewegungsmittels (40);
   - Erfassen (12) von Zustandsdaten (ZD) des Fortbewegungsmittels (40); und
   - Bestimmen (13) zu verwendender Betriebsparameter ($BP_O$) mittels eines Optimierungsalgorithmus auf Grundlage der Umfelddaten (UD), der Zustandsdaten (ZD) und initialer Betriebsparameter ($BP_I$), wobei aus den Umfelddaten (UD), den Zustandsdaten (ZD) und den Betriebsparametern (BPI) ein Gefährdungspotential bestimmt wird;

   **dadurch gekennzeichnet, dass** aus einer Degradierung der Betriebsparameter ($BP_I$) ein Komfortpotential bestimmt wird, und dass durch den Optimierungsalgorithmus eine Menge minimaler bzw. maximaler Parameterwerte zum Zeitpunkt einer anstehenden Aktion innerhalb eines aktuellen Szenarios identifiziert wird, die einen möglichst sicheren und komfortablen Ablauf der Aktion gewährleisten, aus der anschließend eine situationsgeeignete Parameterkombination gewählt wird.

2. Verfahren gemäß Anspruch 1, wobei das System mit einer Fehlfunktion ein Bremssystem (41) oder ein Lenksystem (42) ist.

3. Verfahren gemäß Anspruch 1 oder 2, wobei die Umfelddaten (UD) eine Verkehrslage oder Umweltparameter beschreiben.

4. Verfahren gemäß Anspruch 3, wobei die Umweltparameter einen Reibwert, eine Umgebungstemperatur oder Informationen über eine Steigung oder ein Gefälle umfassen.

5. Verfahren gemäß einem der vorherigen Ansprüche, wobei die Zustandsdaten (ZD) eine Geschwindigkeit, Abstände, Lenkwinkel oder Reaktionszeitpunkte umfassen.

6. Verfahren gemäß einem der vorherigen Ansprüche, wobei der Optimierungsalgorithmus ein evolutionärer Algorithmus ist.

7. Verfahren gemäß einem der Ansprüche 1 bis 6, wobei das Verfahren in Echtzeit im Fortbewegungsmittel (40) ausgeführt wird.

8. Verfahren gemäß einem der Ansprüche 1 bis 6, wobei der Optimierungsalgorithmus außerhalb des Fortbewegungsmittels (40) ausgeführt wird und die bestimmten (13) zu verwendenden Betriebsparameter ($BP_O$) drahtlos an das Fortbewegungsmittel (40) übermittelt werden.

9. Verfahren gemäß einem der Ansprüche 1 bis 6, wobei im Ansprechen auf eine lokal im Fortbewegungsmittel (40) erkannte Situation zu verwendende Betriebsparameter ($BP_O$) aus einer Datenbank (51) außerhalb des Fortbewegungsmittels (40) abgerufen werden.

10. Computerprogramm mit Instruktionen, die bei Ausführung durch einen Computer den Computer zur Ausführung der Schritte eines Verfahrens gemäß einem der Ansprüche 1 bis 9 zur Anpassung von Betriebsparametern eines Fortbewegungsmittels (40) im Ansprechen auf das Erfassen (10) einer Fehlfunktion eines Systems (41, 42) des Fortbewegungsmittels (40) veranlassen.

11. Vorrichtung (20) zur Anpassung von Betriebsparametern eines Fortbewegungsmittels (40) im Ansprechen auf das Erfassen (10) einer Fehlfunktion eines Systems (41, 42) des Fortbewegungsmittels (40), mit:

    - einem Überwachungsmodul (22) zum Erfassen (10) einer Fehlfunktion eines Systems (41, 42) des Fortbewegungsmittels (40);
    - einem Datenerfassungsmodul (23) zum Erfassen (11) von Umfelddaten (UD) bezüglich einer Fahrsituation des Fortbewegungsmittels (40) und zum Erfassen (12) von Zustandsdaten (ZD) des Fortbewegungsmittels (40); und
    - einem Rechenmodul (24) zum Bestimmen (13) zu verwendender Betriebsparameter ($BP_O$) mittels eines Optimierungsalgorithmus auf Grundlage der Umfelddaten (UD), der Zustandsdaten (ZD) und initialer Betriebsparameter ($BP_I$), wobei das Rechenmodul (24) eingerichtet ist, aus den Umfelddaten (UD), den Zustandsdaten (ZD) und den Betriebsparametern (BPI) ein Gefährdungspotential zu bestimmen;

    **dadurch gekennzeichnet, dass** das Rechenmodul (24) zudem eingerichtet ist, aus einer Degradierung der Betriebsparameter ($BP_I$) ein Komfortpotential zu bestimmen, und mittels des Optimierungsalgorithmus eine Menge minimaler bzw. maximaler Parameterwerte zum Zeitpunkt einer anstehenden Aktion innerhalb eines aktuellen Szenarios zu identifizieren, die einen möglichst sicheren und komfortablen Ablauf der Aktion gewährleisten, aus der das Rechenmodul (24) anschließend eine situationsgeeignete Parameterkombination wählt.

12. Fortbewegungsmittel (40), wobei das Fortbewegungsmittel (40) eine Vorrichtung (20) gemäß Anspruch 11 aufweist oder eingerichtet ist, ein Verfahren gemäß einem der Ansprüche 1 bis 9 zur Anpassung von Betriebsparametern des Fortbewegungsmittels (40) im Ansprechen auf das Erfassen (10) einer Fehlfunktion eines Systems (41, 42) des Fortbewegungsmittels (40) auszuführen.

**Claims**

1. Method for adapting operating parameters of a means of transport (40) in response to the detection (10) of a malfunction of a system (41, 42) of the means of transport (40), comprising the steps of:

    - detecting (10) a malfunction of a system (41,42) of the means of transport (40);
    - recording (11) environmental data (UD) relating to a driving situation of the means of transport (40);
    - recording (12) status data (ZD) of the means of transport (40); and
    - determining (13), by means of an optimization algorithm based on the environmental data (UD), the status data (ZD) and initial operating parameters ($BP_I$), operating parameters (BPo) that are to be used, a hazard potential being determined from the environmental data (UD), the status data (ZD) and the operating parameters (BPI);

    **characterized in that** a comfort potential is determined from a degradation of the operating parameters ($BP_I$) and **in that** the optimization algorithm identifies a set of minimum or maximum parameter values at the time of a pending action within a current scenario which ensure the safest and most comfortable execution of the action, from which set a parameter combination suitable for the situation is then selected.

2. Method according to claim 1, wherein the malfunctioning system is a braking system (41) or a steering system (42).

3. Method according to claim 1 or claim 2, wherein the environmental data (UD) describe a traffic situation or environmental parameters.

4. Method according to claim 3, wherein the environmental parameters include a coefficient of friction, an ambient temperature or information about an uphill or downhill gradient.

5. Method according to any of the preceding claims, wherein the status data (ZD) include a speed, distances, steering angles or reaction times.

6. Method according to any of the preceding claims, wherein the optimization algorithm is an evolutionary algorithm.

7. Method according to any of claims 1 to 6, wherein the method is executed in real time in the means of transport (40).

8. Method according to any of claims 1 to 6, wherein the optimization algorithm is executed outside the means of transport (40) and the determined (13) operating parameters (BPo) that are to be used are transmitted wirelessly to the means of transport (40).

9. Method according to any of claims 1 to 6, wherein, in response to a situation detected locally in the means of transport (40), operating parameters (BPo) that are to be used are retrieved from a database (51) outside the means of transport (40).

10. Computer program comprising instructions which, when executed by a computer, cause the computer to execute the steps of a method according to any of claims 1 to 9 for adapting operating parameters of a means of transport (40) in response to the detection (10) of a malfunction of a system (41, 42) of the means of transport (40).

11. Device (20) for adapting operating parameters of a means of transport (40) in response to the detection (10) of a malfunction of a system (41, 42) of the means of transport (40), comprising:

   - a monitoring module (22) for detecting (10) a malfunction of a system (41, 42) of the means of transport (40);
   - a data recording module (23) for recording (11) environmental data (UD) relating to a driving situation of the means of transport (40) and for recording (12) status data (ZD) of the means of transport (40); and
   - a computing module (24) for determining (13), by means of an optimization algorithm based on the environmental data (UD), the status data (ZD) and initial operating parameters ($BP_I$), operating parameters (BPo) that are to be used, the computing module (24) being configured to determine a hazard potential from the environmental data (UD), the status data (ZD) and the operating parameters (BPI);

   **characterized in that** the computing module (24) is also configured to determine a comfort potential from a degradation of the operating parameters ($BP_I$), and to identify, by means of the optimization algorithm, a set of minimum or maximum parameter values at the time of a pending action within a current scenario which ensure the safest and most comfortable execution of the action, from which set the computing module (24) then selects a parameter combination suitable for the situation.

12. Means of transport (40), wherein the means of transport (40) comprises a device (20) according to claim 11 or is configured to execute a method according to any of claims 1 to 9 for adapting operating parameters of the means of transport (40) in response to the detection (10) of a malfunction of a system (41, 42) of the means of transport (40).

**Revendications**

1. Procédé d'adaptation de paramètres de fonctionnement d'un moyen de locomotion (40) en réponse à la détection (10) d'un dysfonctionnement d'un système (41, 42) du moyen de locomotion (40), comportant les étapes de :

   - détection (10) d'un dysfonctionnement d'un système (41, 42) du moyen de locomotion (40) ;
   - détection (11) de données d'environnement (UD) concernant une situation de conduite du moyen de locomotion (40) ;
   - détection (12) de données d'état (ZD) du moyen de locomotion (40) ; et
   - détermination (13) de paramètres de fonctionnement (BPo) à utiliser par le biais d'un algorithme d'optimisation sur la base des données d'environnement (UD), des données d'état (ZD) et de paramètres de fonctionnement initiaux ($BP_I$), dans lequel un potentiel de danger est déterminé à partir des données d'environnement (UD), des données d'état (ZD) et des paramètres de fonctionnement (BPI) ;

   **caractérisé en ce qu'**un potentiel de confort est déterminé à partir d'une dégradation des paramètres de fonctionnement ($BP_I$), et **en ce que** l'algorithme d'optimisation identifie un ensemble de valeurs de paramètres minimales ou maximales au moment d'une action en attente à l'intérieur d'un scénario actuel, qui garantissent un déroulement aussi sûr et confortable que possible de l'action, à partir duquel une combinaison de paramètres adaptée à la situation est ensuite choisie.

2. Procédé selon la revendication 1, dans lequel le système comportant un dysfonctionnement est un système de frein (41) ou un système de direction (42).

3. Procédé selon la revendication 1 ou 2, dans lequel les données d'environnement (UD) décrivent une situation de trafic ou des paramètres d'environnement.

4. Procédé selon la revendication 3, dans lequel les paramètres d'environnement comprennent un coefficient de frottement, une température ambiante ou des informations sur une montée ou une descente.

5. Procédé selon l'une des revendications précédentes, dans lequel les données d'état (ZD) comprennent une vitesse, des distances, un angle de braquage ou des moments de réaction.

6. Procédé selon l'une des revendications précédentes, dans lequel l'algorithme d'optimisation est un algorithme évolutionniste.

7. Procédé selon l'une des revendications 1 à 6, dans lequel le procédé est mis en œuvre en temps réel dans le moyen de locomotion (40).

8. Procédé selon l'une des revendications 1 à 6, dans lequel l'algorithme d'optimisation est mis en œuvre à l'extérieur du moyen de locomotion (40) et les paramètres de fonctionnement (BPo) à utiliser déterminés (13) sont transmis sans fil au moyen de locomotion (40).

9. Procédé selon l'une des revendications 1 à 6, dans lequel, en réponse à une situation détectée localement dans le moyen de locomotion (40), des paramètres de fonctionnement (BPo) à utiliser sont extraits d'une base de données (51) à l'extérieur du moyen de locomotion (40).

10. Programme informatique comportant des instructions qui, lorsqu'elles sont mises en œuvre par un ordinateur, amènent l'ordinateur à mettre en œuvre les étapes d'un procédé selon l'une des revendications 1 à 9 pour adapter des paramètres de fonctionnement d'un moyen de locomotion (40) en réponse à la détection (10) d'un dysfonctionnement d'un système (41, 42) du moyen de locomotion (40).

11. Dispositif (20) d'adaptation de paramètres de fonctionnement d'un moyen de locomotion (40) en réponse à la détection (10) d'un dysfonctionnement d'un système (41, 42) du moyen de locomotion (40), comportant :

- un module de surveillance (22) pour la détection (10) d'un dysfonctionnement d'un système (41, 42) du moyen de locomotion (40) ;
- un module de détection de données (23) pour la détection (11) de données d'environnement (UD) concernant une situation de conduite du moyen de locomotion (40) et pour la détection (12) de données d'état (ZD) du moyen de locomotion (40) ; et
- un module de calcul (24) pour la détermination (13) de paramètres de fonctionnement (BPo) à utiliser par le biais d'un algorithme d'optimisation sur la base des données d'environnement (UD), des données d'état (ZD) et de paramètres de fonctionnement initiaux ($BP_I$), dans lequel le module de calcul (24) est conçu pour déterminer un potentiel de danger à partir des données d'environnement (UD), des données d'état (ZD) et des paramètres de fonctionnement ($BP_I$) ;

**caractérisé en ce que** le module de calcul (24) est en outre conçu pour déterminer un potentiel de confort à partir d'une dégradation des paramètres de fonctionnement ($BP_I$), et identifier, par le biais de l'algorithme d'optimisation, un ensemble de valeurs de paramètres minimales ou maximales au moment d'une action en attente à l'intérieur d'un scénario actuel, qui garantissent un déroulement aussi sûr et confortable que possible de l'action, parmi lequel le module de calcul (24) choisit ensuite une combinaison de paramètres adaptée à la situation.

12. Moyen de locomotion (40), dans lequel le moyen de locomotion (40) présente un dispositif (20) selon la revendication 11 ou est conçu pour mettre en œuvre un procédé selon l'une des revendications 1 à 9 pour l'adaptation de paramètres de fonctionnement du moyen de locomotion (40) en réponse à la détection (10) d'un dysfonctionnement d'un système (41, 42) du moyen de locomotion (40).

FIG. 1

FIG. 2

FIG. 3

FIG. 4

60

$v_{\text{Ego}}$

$d_{\text{Ziel}}$

61

$v_{\text{Ziel}}$

FIG. 5

A1

A2

A3

A4

A9

A5

A8

A6

A7

FIG. 6

FIG. 7

FIG. 8

FIG. 9

FIG. 10

# EP 4 486 616 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020202477 A1
- WO 2017220169 A1
- WO 2021089567 A1
- DE 102018131470 A1
- DE 102019208735 B4
- DE 102016007563 A1
- DE 102019125817 A1
- DE 102019115330 A1
- US 20210171025 A1
- US 20200283007 A1